# EUROPEAN PATENT SPECIFICATION

(11) **EP 2 410 704 B1**
(45) Date of publication and mention of the grant of the patent: **01.05.2013**
(21) Application number: 11174957.8
(22) Date of filing: 22.07.2011
(51) Int. Cl.: H04L 12/58, H04L 12/18

(54) **System and method of posting messages to different messaging services**
System und Verfahren zum Senden von Nachrichten an verschiedene Nachrichtendienste
Système et procédé pour afficher des messages sur différents services de messagerie

(30) Priority: 23.07.2010 US 367080 P
(43) Date of publication of application: 25.01.2012
(73) Proprietor: Research In Motion Limited, Waterloo, ON N2L 3W8 (CA)
(72) Inventor: Chen, Henry, Yao-Tsu, Waterloo, Ontario N2L 3W8 (CA); Stovicek, Thomas, Jan, Redwood City, CA California 94065 (US)
(74) Representative: MERH-IP Matias Erny Reichl Hoffmann

(56) References cited:
- US-B1- 6 529 942
- US-B1- 7 509 382

## Description

### Technical Field

The disclosure relates generally to systems and methods relating to messaging services, and more particularly to systems and methods of posting messages to different messaging services.

### Background

In order to post a single message to multiple electronic communications (e.g., instant messaging communications or postings to electronic messaging forums) systems, a user is required to manually duplicate the message to post it to each messaging network individually. This can be time-consuming and annoying, as well as a waste of device resources (e.g., battery power and processing power) and a source of error and confusion.

Moreover, responses and other communications made by a recipient of the message in one messaging service typically will not be seen or notified to users of different messaging services.
US 7,509,382, B1 discloses a method for deflecting threaded email discussions to message forums, wherein the method includes providing a first user operating an email client application to send a first email message addressed to one or more recipient users with a first option to designate the first email message for posting to a message forum.

### Summary

The present invention relates to a method of providing message content data pertaining to a pre-existing message thread to a plurality of electronic message services according to the appended claims.

Various examples of methods according to such aspects of the disclosure comprise: in response to receipt of signals representing instructions to post new message content, identifying a plurality of electronic messaging services to which the new message content is to be posted; generating for each of the identified messaging services a corresponding instruction data set, each instruction data set executable by at least one processor associated with the corresponding messaging service to cause the new message content to be posted; and providing a generated instruction data set to at least one corresponding messaging service.

In further aspects the disclosure provides methods, systems, and machine-executable instruction sets, and articles of manufacture comprising such instruction sets, for posting to or otherwise providing electronic message content for processing by multiple messaging services. Various examples of methods according to such aspects of the disclosure comprise: in response to receipt of signals representing instructions to post new message content associated with an existing message thread, identifying a plurality of electronic messaging services to which the new message content is to be posted; generating for at least one of the identified messaging services a corresponding instruction data set, each of the at least one instruction data set executable by a processor associated with a corresponding messaging service to cause the new message content to be posted; and providing a generated instruction data set to the at least one corresponding messaging service.

In some aspects, the disclosure provides a method of providing message content data to a plurality of electronic messaging services, the method comprising: in response to receipt of signals representing instructions to post new message content, identifying a plurality of electronic messaging services to which the new message content is to be posted; generating for each of the identified messaging services a corresponding instruction data set, each instruction data set executable by at least one processor associated with the corresponding messaging service to cause the new message content to be posted; and providing a generated instruction data set to at least one corresponding messaging service.

In some examples, the received instruction data set to post new message content includes a data set representing a selection of the two or more messaging services to which the new message content is to be posted.

In some examples, identifying the two or more messaging services comprises extracting information about at least one of the two or more messaging services from a message body data set included in the received instructions.

In some examples, each generated instruction data set comprises data flagging the new message content as being associated with the identified two or more messaging services.

In some examples, each generated instruction data set is a duplicate of the received instruction data set.

In some examples, the method includes determining whether a copy of the new message content is already posted on at least one of the identified two or more messaging services.

In some examples, upon determining that a copy of the new message content is already posted on a given messaging service, the given messaging service is removed from the identified messaging services.

In some examples, the method includes transmitting signals to notify that a copy of the new message content is already posted on at least one of the identified messaging services.

In some examples, the new message content comprises at least one of: text data, image data, video data, and audio data.

In some examples, the method includes providing an option to select one or more messaging services to post the new message content, wherein a selection of one or more messaging services is included in the identified messaging services.

In some aspects, the disclosure provides a medium or media comprising machine-readable instructions executable by a processor of a computing device, the machine-readable instructions, when executed, causing the computing device to: in response to receipt of signals representing instructions to post new message content, identify a plurality of electronic messaging services to which the new message content is to be posted; generate for each of the identified messaging services a corresponding instruction data set, each instruction data set executable by at least one processor associated with the corresponding messaging service to cause the new message content to be posted; and provide a generated instruction data set to at least one corresponding messaging service.

In some examples, the computing device is a wireless communication device.

In some examples, the computing device is a network server.

In some aspects, the disclosure provides a memory for a computer comprising coded instructions executable by a processor of a computing device, the coded instructions, when executed, causing the computing device to: in response to receipt of signals representing instructions to post new message content, identify a plurality of electronic messaging services to which the new message content is to be posted; generate for each of the identified messaging services a corresponding instruction data set, each instruction data set executable by at least one processor associated with the corresponding messaging service to cause the new message content to be posted; and provide a generated instruction data set to at least one corresponding messaging service.

In some examples, the computing device is a wireless communication device.

In some examples, wherein the computing device is a network server.

In some aspects, the disclosure provides a wireless communication device comprising: a processor; and memory storing machine-readable instructions executable by the processor to: in response to receipt of signals representing instructions to post new message content, identify a plurality of electronic messaging services to which the new message content is to be posted; generate for each of the identified messaging services a corresponding instruction data set, each instruction data set executable by at least one processor associated with the corresponding messaging service to cause the new message content to be posted; and provide a generated instruction data set to at least one corresponding messaging service.

In some aspects, the disclosure provides a network server comprising: a processor; and memory storing machine-readable instructions executable by the processor to: receive signals representing an instruction data set to post new message content; identify two or more messaging services to which the new message content is to be posted, the identification including identification of at least one respective messaging server associated with the two or more messaging services; generate an instruction data set for each of the identified messaging services, to cause the new message content to be posted; and transmit signals representing each respective generated instructions set to the at least one respective messaging server associated with each respective messaging service.

In some examples, the memory further comprises a database storing data sets having information associating messages with two or more messaging services to which each message is posted.

In some aspects, the disclosure provides a method for providing message content data to a plurality of electronic messaging services, the method comprising: in response to receipt of signals representing instructions to post new message content for an existing message thread, identifying a plurality of messaging services associated with the existing message thread, the identification including identification of at least one respective messaging server associated with the two or more messaging services; selecting at least one of the two or more identified messaging services to post the new message content; generating for each of the selected messaging services a corresponding instruction data set, each instruction data set executable by at least one processor associated with the corresponding messaging service to cause the new message content to be posted; and providing a generated instruction data set to at least one corresponding messaging service.

In some examples, the received instruction data set to post new message content includes a data set representing a selection of the two or more messaging services to which the new message content is to be posted.

In some examples, identifying the two or more messaging services comprises extracting information about at least one of the two or more messaging services from a message body data set included in the received instructions.

In some examples, identifying the two or more messaging services comprises querying a database having information about the existing message thread to identify at least one messaging service associated with the existing message.

In some examples, the method includes providing a notification of the identified message services.

In some examples, the method includes providing an option to select one or more messaging services to post the new message content, and selecting the at least one messaging service to post the new message content comprises receiving a selection of the at least one messaging service in response to the provided option.

In some examples, at least one messaging service is identified prior to providing the option, and at least the option includes a pre-selection of the at least one identified messaging service.

In some examples, selecting the at least one messaging service to post the new message content comprises automatically selecting all of the identified messaging services.

In some examples, each generated instruction data set comprises data flagging the new message content as being associated with the identified two or more messaging services.

In some examples, each generated instruction data set is a duplicate of the received instruction data set.

In some examples, the method includes determining whether a copy of the new message content is already posted on at least one of the at least one selected messaging service.

In some examples, upon determining that a copy of the new message content is already posted on a given messaging service, the given messaging service is removed from the selected messaging services.

In some examples, the method includes transmitting signals to notify that a copy of the new message content is already posted on at least one of the selected messaging services.

In some examples, the new message content comprises at least one of: text data, image data, video data, and audio data.

In some aspects, the disclosure provides a memory for a computer comprising coded instructions executable by a processor of a computing device, the coded instructions, when executed, causing the computing device to: in response to receipt of signals representing instructions to post new message content for an existing message thread, identify a plurality of messaging services associated with the existing message thread, the identification including identification of at least one respective messaging server associated with the two or more messaging services; select at least one of the two or more identified messaging services to post the new message content; generate for each of the selected messaging services a corresponding instruction data set, each instruction data set executable by at least one processor associated with the corresponding messaging service to cause the new message content to be posted; and provide a generated instruction data set to at least one corresponding messaging service.

In some examples, the computing device is a wireless communication device.

In some examples, the computing device is a network server.

In some aspects, the disclosure provides a wireless communication device comprising: a processor; and memory storing machine-readable instructions executable by the processor to: in response to receipt of signals representing instructions to post new message content for an existing message thread, identify a plurality of messaging services associated with the existing message thread, the identification including identification of at least one respective messaging server associated with the two or more messaging services; select at least one of the two or more identified messaging services to post the new message content; generate for each of the selected messaging services a corresponding instruction data set, each instruction data set executable by at least one processor associated with the corresponding messaging service to cause the new message content to be posted; and provide a generated instruction data set to at least one corresponding messaging service.

In some aspects, the disclosure provides a network server comprising: a processor; and memory storing machine-readable instructions executable by the processor to: in response to receipt of signals representing instructions to post new message content for an existing message thread, identify a plurality of messaging services associated with the existing message thread, the identification including identification of at least one respective messaging server associated with the two or more messaging services; select at least one of the two or more identified messaging services to post the new message content; generate for each of the selected messaging services a corresponding instruction data set, each instruction data set executable by at least one processor associated with the corresponding messaging service to cause the new message content to be posted; and provide a generated instruction data set to at least one corresponding messaging service.

In some examples, the memory further comprises a database storing data sets having information associating messages with two or more messaging services to which each message is posted.

### Brief Description of the Drawings

Reference is made to the drawings, which show by way of examples of the present disclosure, and in which:

FIG. 1 shows in block diagram form components of a wireless device suitable for use in implementing aspects of the disclosure;

FIG. 2 shows in block diagram form components of a communication system suitable for use in implementing aspects of the disclosure;

FIG. 3 is a functional block diagram of an example of a data structure suitable for implementation in memory accessible by one or more communications processors in accordance with the disclosure;

FIG. 4 is a schematic block diagram of an example of components of a communication system suitable for use in implementing aspects of the disclosure;

FIG. 5 is a schematic flowchart illustrating an example of a method for posting a message to multiple messaging services in accordance with the disclosure;

FIG. 6 is a schematic block diagram of an example of components of a communication system suitable for use in implementing aspects of the disclosure;

FIG. 7 is a flowchart illustrating an example of a method for transmitting a message for an existing thread to different messaging services;

FIGS. 8A and 8B illustrate examples of user interfaces suitable for the disclosed systems and methods;

FIG. 9 shows an example of a user interface suitable for the disclosed systems and methods; and

FIG. 10 shows another example of a user interface suitable for the disclosed systems and methods.

Throughout the appended drawings, like features are identified by like reference numerals.

### Detailed Description

In various aspects the disclosure provides methods, systems, and machine-executable instruction sets, and articles of manufacture comprising such instruction sets, for posting or otherwise providing electronic message content for processing by multiple messaging services.

Various aspects and examples of the disclosure may be implemented in the form of articles of manufacture such as memory(ies) communicatively linked to one or more processors and comprising coded and/or other machine-readable instruction sets executable by the processor(s) to cause the processor(s) and/or other components communicatively linked thereto to carry out processes described herein. In some examples such processors can be configured to control, for example, wireless communication devices. Such processors can, for example, be implemented in the form of controllers for wireless handheld devices, as desktop or other non-mobile devices, and/or servers configured to control any one or more of such devices.

The same and further aspects and examples of the invention can be implemented in the form(s) of wire-line or wireless handheld communication devices, desktop and/or other non-mobile computers and communication devices, and/or servers configured to control and/or otherwise communicate with any one or more of such devices.

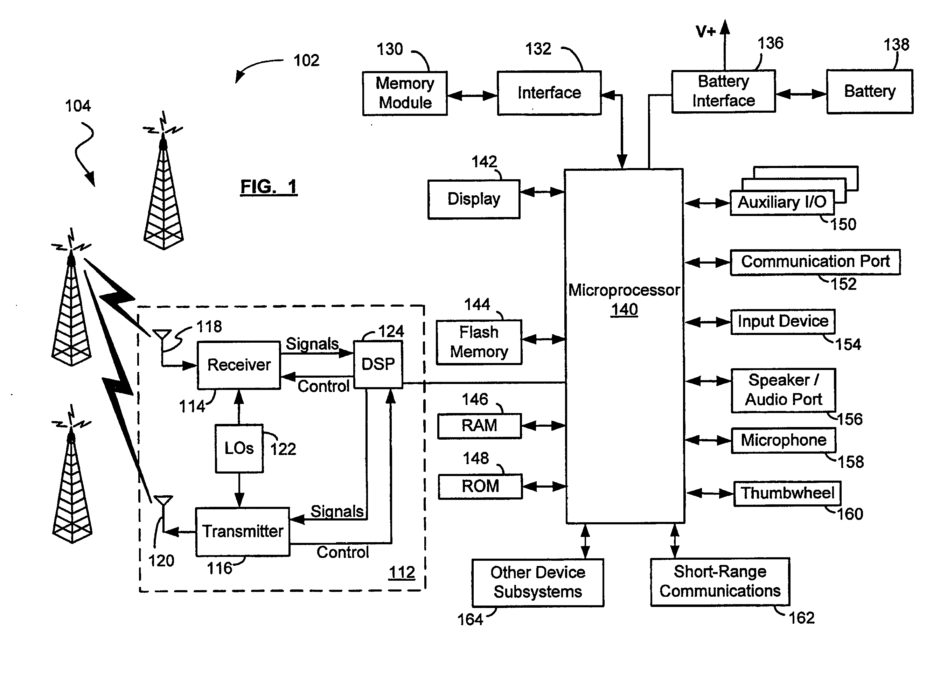

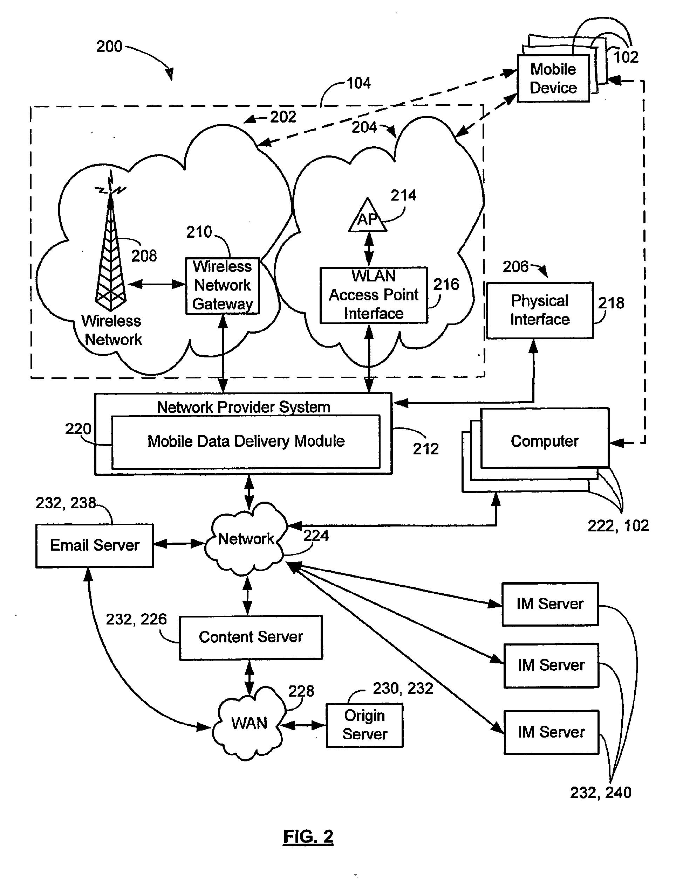

FIG. 1 shows in block diagram form components of a device 102 suitable for use in implementing various aspects and examples of the disclosure. In the example shown, device 102 is a wireless device which can communicate with other devices through, for example, one or more wireless communication networks 104. Wireless network(s) 104 can include, among other components, any one or more antennae, base stations, and supporting radio or other wireless communications devices for supporting wireless communications between the wireless device 102 and other wire-line or wireless devices (not shown) connected to wireless network 104. Any or all of wireless network(s) 104 may be coupled to wireless network gateway(s) and thence to one or more wide area network(s), such as the internet or one or more public switched telephone network(s) (PSTN(s)), as shown for example in FIG. 2.

Wireless implementations of communication device(s) 102 suitable for use in implementing various aspects and examples of the disclosure may, for example, comprise two-way communication devices having text and/or voice data communication capabilities, including for example the ability to communicate with other computer systems. Such wireless communication device(s) 102 may include one or more handheld device(s) such as cellular telephones, palm top computing devices, or other personal digital assistants (PDAs). Depending on the functionality(ies) they provide, device(s) 102 may be referred to as data messaging device(s), two-way pager(s), cellular or other wireless telephone(s) with voice and data messaging capabilities, wireless Internet appliance(s), a data communication device (with or without telephony capabilities), and/or, in some examples, portable media or music players. Wireless device(s) 102 may communicate with any one or more of a plurality of fixed transceiver stations within their geographic coverage area(s).

Other examples of communication devices 102 suitable for use in implementing the disclosure can include any networked or other desktop, laptop, server-class, or other data and/or communications processing devices.

Wireless implementations of communication device(s) 102 may incorporate communication subsystem(s) 112, which can for example include one or more receivers 114, transmitters 116, and associated components, such as one or more antenna elements 118 and 120, local oscillators (LOs) 122, and processing module(s) such as digital signal processor(s) (DSP(s)) 124. In various examples, antenna elements 118 and/or 120 may be embedded within or otherwise internal to wireless device(s) 102. As will be apparent to those skilled in the relevant arts, the particular design of the communication subsystem(s) 112 will depend upon the nature of communications to be employed, including for example the type of wireless network(s) 104 in which the wireless device(s) 102 may be expected to operate.

A wireless device 102 may send and receive communication signals over the wireless network 104 after the required network registration or activation procedures have been completed. Signals received by antenna(s) 118 through the wireless network 104 may be input to associated receiver(s) 114, which may perform such functions as signal amplification, frequency down conversion, filtering, channel selection, etc., as well as analog-to-digital (A/D) conversion. A/D conversion of a received signal can, for example, allow more complex communication functions such as demodulation and decoding to be performed in DSP(s) 124. Signals to be transmitted may be processed, including for example modulation and encoding by the DSP 124. DSP-processed signals may be input to transmitter(s) 116 for digital-to-analog (D/A) conversion, frequency up conversion, filtering, amplification, and/or transmission to the wireless network 104 via antenna(s) 120. In addition to processing of communication signals, DSP(s) 124 can provide for receiver and transmitter control. For example, any gains applied to communication signals in the receiver(s) 114 and the transmitter(s) 116 may be adaptively controlled through automatic gain control algorithms implemented in the DSP(s) 124.

Network access may be associated with a subscriber or user of the wireless device 102 via a memory module, such as a memory module 130, which comprise one or more Subscriber Identity Module (SIM) cards for use, for example, in a GSM network; or Universal SIM (USIM) card(s) for use in a UMTS. A SIM card can inserted in or otherwise connected to an interface 132 of a wireless device 102 in order to facilitate operation of the device 102 in conjunction with a wireless network 104. Alternatively, a wireless device 102 may have an integrated identity module for use with systems such as Code Division Multiple Access (CDMA) systems.

A wireless device 102 may include a power supply such as a battery interface 136 for receiving one or more rechargeable batteries 138. Battery(ies) 138 can provide electrical power to at least some of the electrical components 142, 144, 146, 148, 118, 114, 124, 116, 120, 154, 140, etc., of the wireless device 102, and a battery interface 136 can provide a mechanical and/or electrical connection to facilitate such powering. A battery interface 136 may be coupled to a regulator (not shown) to provide regulated ower V+ to the circuitry of a wireless device 102.

A wireless device 102 may include one or more microprocessors 140 to control overall and/or specific operation of the wireless device 102 and its various components. Communication functions, including for example data and/or voice communications, may be performed through a communication subsystem 112. Microprocessor(s) 140 may also interact with additional device subsystems or components such as one or more displays 142, flash memory(ies) 144, random access memory(ies) (RAM(s)) 146, read-only memory(ies) (ROM(s) 148, auxiliary input/output (I/O) subsystem(s) 150, Universal Serial Bus(es) (USB(s)) and/or other communication port(s) 152, input device(s) 154 (e.g., one or more keyboards, keypads and/or touch-sensitive or touch-emulative devices), speaker(s) and/or audio port(s) 156 for connecting to, for example, one or more sets of headphones, microphone(s) 158, clickable or other thumbwheel(s) and/or scroll button(s) or other pointing device(s) 160, short-range communications subsystem(s) 162, and/or any other required or desired device subsystem(s) generally designated as 164.

In some examples of device(s) 102, one or more input devices 154 may be incorporated into the display(s) 142, for example where the display 142 is a touch-sensitive display (e.g., for displaying virtual or soft keys, such as an image of a keyboard). Touch-sensitive varieties of display(s) 142 may for example allow navigational and/or other input through contact with the display by a users fingers, or through the use of a stylus or a similar pointing device.

Some of the subsystems shown in FIG. 1 can perform communication-related functions, whereas other subsystems may provide "resident" or on-device functions. Notably, some subsystems, such as input device 154(s), display(s) 142, and thumbwheel(s) or other pointing device(s) 160, for example, may be used for both communication-related functions, such as entering text messages for transmission over wireless network(s) 104, and/or executing device-resident functions such as calculator or task list applications. Operating system software used by the microprocessor 140 may be stored in persistent memory(ies) such as a flash memory 144, a ROM 148, or similar storage element(s). Those skilled in the relevant arts will appreciate that the operating system, specific device applications, and/or parts thereof, may be loaded, temporarily or otherwise volatile store(s) such as RAM(s) 146.

Microprocessor(s) 140, in addition to controlling operating system functions, can enable and control execution of software applications on wireless device(s) 102. Predetermined sets of applications that control basic device operations, including for example data and voice communication applications, are commonly installed on wireless devices 102 during or after manufacture. Further applications, which may provide a wide range of business, communications, and/or entertainment functionality(ies), may be acquired and installed separately as desired by individual users.

A wireless device 102 may include one or more personal information manager (PIM) applications having the ability to organize and manage data items relating to a user of the device, such as, but not limited to, instant messaging, email, calendar events, voice mails, appointments, and task items. One or more memory stores may be available on the wireless device 102 to facilitate storage of such information, including for example flash memory(ies) 144, RAM(s) 146, ROM(s) 148, memory module(s) 130, and/or other types of memory storage devices such as external hard drives, flash drives, and/or FLASH memory cards represented by the other device subsystems 164, such as Secure Digital (SD) cards, mini SD cards, micro SD cards, etc.

Applications executed by processor(s) 140 of handheld, desktop, or other examples of device(s) 102 can have the ability to send and receive data signals via either or both of wireless network(s) 104 and other wired and/or wireless link(s) to other computer system(s). Links to wired computer system(s) may for example be provided via one or more serial or other communication ports 152 and/or short-range communications subsystem(s) 162. Additional applications may be loaded onto wireless device 102 through wireless network(s) 104, auxiliary I/O subsystem(s) 150, communication port(s) 152, short-range communications subsystem(s) 162, and/or any other suitable subsystem 164, and installed by a user in the RAM 146 or other memory(ies) for access and execution by one or more microprocessors 140. Such flexibility in application installation can increase the functionality of a device 102, and may provide enhanced on-board functionality, communication-related functions, or both. For example, secure communication applications may enable electronic commerce functions and other such financial transactions to be performed using the device 102.

In a data communication mode, one or more received data signals representing information such as a text message, an email message, a media file to be transferred, or Web page content may be processed by the communication subsystem 112 and input to the microprocessor(s) 140. Microprocessor(s) 140 will further process such signals for output to the display(s) 142 and/or one or more auxiliary I/O device(s) 150. A user of the wireless device 102 may compose data items, such as email messages, for example, using one or input device(s) 154 such as a clickable thumbwheel 160, touchscreen 142, or both in conjunction with the display(s) 142 and/or auxiliary I/O device(s) 150. Input device(s) 154 and virtual, touch-based keypads provided through display(s) 142 may comprise any suitable type of keypad(s), including for example any one or more complete alphanumeric keypads, telephone-type keypads, and/or special-purpose physical and/or virtual "keypads."

For voice communications, overall operation of a wireless device 102 may be similar, except that for example received audio signals may be output to a speaker and/or audio port 156, and signals for transmission may be generated by a transducer such as a microphone 158. Alternative voice or audio I/O subsystems, such as a voice message recording subsystem, may also be implemented on the device 102. Although voice and/or other audio signal output is typically accomplished primarily through the speaker or audio port 156, the display 142 may also be used to provide an indication of the identity of a calling party, duration of a voice call, or other voice call related information. Stereo headphones may also be used in place of the speaker 156.

One or more serial or other external communication ports 152 may be implemented in personal digital assistants (PDAs) or other communication devices for which data transfer function such as, for example, synchronization with a user's computer is desirable. External communication port(s) 152 can for example enable a user to set preferences through an external device or software application and can extend the capabilities of a device 102 by providing for information, media file, software downloads, and other data/signal exchanges between the wireless device 102 and other devices 102, servers, and/or processors other than through the wireless network 104.

Short-range communications subsystem(s) 162 can provide for communication between device 102 and other systems or devices, which need not necessarily be similar devices. For example, a subsystem 162 may include an infrared device and associated circuits and components, or a wireless bus protocol compliant communication mechanism such as a Bluetooth^{TM} communication module to provide for communication with similarly-enabled systems and devices (Bluetooth^{TM} is a registered trademark of Bluetooth SIG, Inc.). In other examples, a short-range communications subsystem 162 may be a wireless networking communications subsystem, conforming to IEEE 802.11 standards such as one or more of 802.1 1b, 802.1 1g, and 802.11n.

FIG. 2 shows a communication system 200 suitable for use with the wireless device 102 shown in FIG. 1. The communication system 200 generally includes one or more wireless devices 102 and at least one wireless network 104. A wireless network 104 may include a wireless Wide Area Network (WAN) 202, a Wireless Local Area Network (WLAN) 204, other interfaces 206 (which may not necessarily be wireless), or a combination thereof.

In the example shown in FIG. 2, communication system 200 comprises, as a component of a wireless network 104, wireless WAN 202 implemented as a packet-based cellular or mobile network that includes a number of base stations 208 (one of which is shown in FIG. 2). Each of the base stations 208 provides, for example, wireless Radio Frequency (RF) coverage to a corresponding area or cell. The wireless WAN 202 is typically operated by a cellular network service provider that sells subscription packages to users of wireless embodiments of devices 102. A wireless WAN 202 can comprise a number of different types of networks, including for example a Mobitex Radio Network, DataTAC, GSM (Global System for Mobile Communication), GPRS (General Packet Radio System), TDMA (Time Division Multiple Access), CDMA (Code Division Multiple Access), CDPD (Cellular Digital Packet Data), iDEN (integrated Digital Enhanced Network) or various other third generation networks such as EDGE (Enhanced Data rates for GSM Evolution), UMTS (Universal Mobile Telecommunications Systems), or Evolution-Data Optimized (EV-DO).

In the example shown in FIG. 2, communications system 200 also includes a wireless network gateway 210 and one or more network provider systems 212. The wireless network gateway 210 provides translation, routing, and other communication services between the network provider system(s) 212 and the WAN 202, which can for example facilitate communication between wireless devices 102 and other devices such as further wireless devices 102 and one or more computing devices 102, 222 connected, directly or indirectly, to any one or more network provider systems 212.

A WLAN 204 can for example comprise one or more networks which can in some examples conform to IEEE 802.11 standards such as one or more of 802.11b, 802.11g, and 802.11n; however, other communications protocols may also be used for WLAN(s) 204. WLAN(s) 204 include one or more wireless RF Access Points (AP) 214 (one of which is shown in FIG. 2) that collectively provide distinct WLAN coverage areas. In the example depicted in FIG. 2, the WLAN 204 is controlled by an enterprise (for example, a business or university in a building or campus type environment) and the access points 214 are connected to an access point (AP) interface 216. AP interface 216 provides translation, routing, and other communication services between the access points 214 and the network provider system 212 to facilitate communication between two or more of wireless devices 102 and other devices (e.g., such as desktop computer(s)) connected, directly or indirectly, to the network provider system 212. AP interface 216 may implemented using a computer, for example, a server running a suitable computer program or software.

According to various examples, other interfaces 206 may be implemented using, for example physical interface(s) indicated by reference 218. Such physical interface(s) 218 can for example include Ethernet, Universal Serial Bus (USB), Firewire, or infrared (IR) connection(s) 152 implemented to exchange information between network provider system(s) 212 and the wireless device(s) 102.

A network provider system 212 can comprise one or more servers or server modules which can for example be located logically behind a firewall (not shown). Such network provider systems 212 may include a number of modules including one or more mobile data delivery modules 220. Various modules running on a network provider system 212 may for example be implemented as a number of services running on a single server, or as a number of interconnected servers each running one or more software programs or applications to implement the functionality of the respective module. A network provider system 212 can provide access for wireless device(s) 102, through either wireless WAN(s) 202, WLAN(s) 204, or other connection(s) 206 to devices 102, 122 connected, for example, through an enterprise network 224 (e.g., an intranet), to the network provider system 212. In various examples, data delivery module(s) 220 may be implemented on one or more computers, such as a network provider system 212.

An enterprise network 224 can comprise one or more local area networks, one or more intranets, the Internet, one or more PSTNs or private electronic communications networks (ECNs), direct connection(s), or any suitable combinations thereof. For example, an enterprise network 224 may comprise an intranet for a corporation or other type of organization. In at least some examples, the network provider system 212 is part of an enterprise network 224, and is located logically behind a corporate firewall and connected to a wireless network gateway 210 through the Internet.

One or more computing devices 222 (e.g., one or more desktop and/or laptop computers) belonging to users who may for example include one or more users of wireless device(s) 102 are typically connected to the enterprise network 224. In some examples, the computing device(s) 222 may include wireless device(s) 102. As described earlier, wireless device(s) 102 may be temporarily and directly connected to the computing device 222, 102 using, for example, a serial or other communication port 152. Such direct connection(s) may for example make use of cable(s), cradle(s), or other docking station(s) or means connected to a serial or other communication port of a computing device 222, 102. For example, a wireless mobile device 102 may placed in a cradle, thereby completing a serial connection between the mobile device 102 and a computing device 222, 102. Alternatively, a wireless device 102 may communicate with the computing device 222, 102 using for example one or more communication subsystems 112, WAN(s) 202, short-range communications subsystem(s) 162, and/or WLAN(s) 204, or any suitable combinations thereof.

As shown in FIG. 2, one or more application/content servers 226 may be connected to an enterprise network 224 and also to further networks, including for example one or more Wide Area Networks (WANs) 228.

In various examples, one or more communications servers 232 such as email servers 238, instant messaging (IM) servers 240, origin servers 230 and/or content servers 226 may be provided as parts of an enterprise network 224. WAN(s) 228 may further connect to other networks. WAN(s) 228 may comprise or be configured to communicate via the Internet, direct connection(s), LAN(s), wireless communication link(s), or any suitable combination thereof.

Content servers 226 and other origin servers 230, such as Web servers, may be connected to the WAN 228.

In various examples, one or more mobile data delivery modules 220 provide connectivity between wireless WAN(s) 202, WLAN(s) 204, and further connection(s) 206, device(s) 102 and/or networks connected directly or indirectly to network provider system(s) 212. In some examples, such connectivity may be provided according to the Hypertext Transfer Protocol (HTTP) providing an Internet based service connections. Network(s) 224, application/content server(s) 226, WAN(s) 228, and/or origin server(s) 230, may serve individually and/or collectively in various combinations as content sources for network provider system(s) 212.

It will be appreciated by those skilled in the relevant arts that system 200 of FIG. 2 comprises but one possible communication network or configuration of a multitude of possible configurations for use with communication device(s) 102.

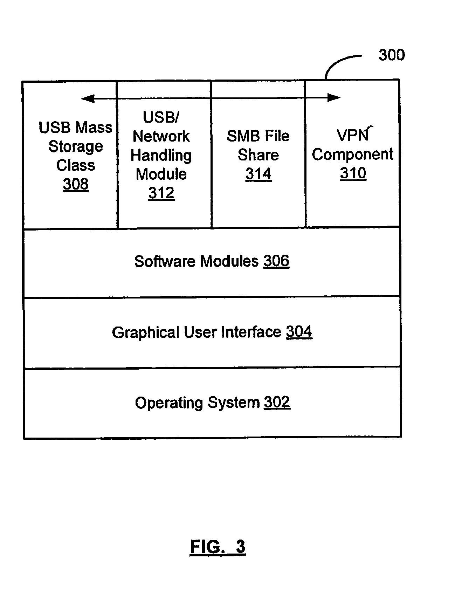

FIG. 3 is a functional block diagram of an example of a data structure suitable for implementation in memory accessible by one or more communications processors, such as any or all of device(s) 222, 102, server(s) 226, 230, 232, 220, etc., in accordance with the disclosure. In the example shown, data structure 300, which is a logical structure, includes various software components for controlling any one or more of devices 222, 102, 226, 230, 232, 220, and may include or be implemented in, for example, one or more of flash memory(ies) 144, RAM(s) 146, ROM(s) 148, memory module(s) 130, and/or other device subsystem(s) 164.

Those skilled in the relevant arts will understand, upon reading this disclosure, that many of the functions, processes and methods disclosed herein can be performed on any one or more of the components of a system 200 such as that shown in FIG. 2, in concentrated or distributed data processing schemes.

In some examples a wireless device 102 is intended to be a multi-tasking wireless communications device configured for sending and receiving data items and for making and receiving voice calls that also includes various applications enabling users to listen to music, watch video files, play games, view picture files, surf the internet wirelessly, etc. To provide a user-friendly environment for controlling operation of the wireless device 102, an operating system (OS) 302 resident on the wireless device 102 can provide a basic set of operations for supporting various applications typically operable through a graphical user interface (GUI) module 304. For example, the operating system 302 provides basic input/output system features to obtain input from auxiliary I/O(s) 150, input device(s) 154, thumbwheel(s) 160, and/or other input devices, and to facilitate output to the user via display(s) 142 and/or auxiliary I/O(s) 150.

GUI module 304 is typically a logical component of an operating system 302. One or more software modules 306 for managing communications or providing a personal digital assistant (PDA) or other functions may also be included. Memory(ies) 300 may also include email, IM, paging, voice communication, calendar, and other text, audio, and/or other client communication applications, which may be combined in, for example, one or more PIM applications having suitably configured communication functions. Typically, such PIM(s) are installed as software modules 306.

One or more memory structures 300 may also include USB mass storage component(s) 308, VPN component(s) 310 used for connecting with virtual private networks (VPNs) and may interact with, for example, file share component(s) or protocol(s) 314 such as server message block (SMB) file share protocol(s), and/or USB/Network handling module(s) 312. In some examples, USB mass storage component(s) 308 may be of one or more classes.

In various examples, any or all of components 308, 310, 312, and 314 may be integrated wholly or partially into a corresponding operating system 302. Alternatively, any or all of components 308, 310, 312, and 314 may be separate software components, as illustrated in FIG. 3. In one example, a USB mass storage component 308 may be a component of the operating system 302 responsible for handling USB interfacing aspects where the wireless device 102 is presented as a mass storage device. The USB mass storage class may be a set of computing communications protocols defined by the USB Implementers Forum that run on the Universal Serial Bus; this standard provides an interface to a variety of storage devices. For example, when a wireless device 102 is connected to a computing device 222, 102 using a USB cable, any internal memory of the wireless device 102 or any memory cards or external mass storage devices inserted into or plugged into the wireless device 102 (e.g., one or more of memory module 130, flash memory 144, RAM 146, ROM 148, other device subsystems 164, and external USB storage device plugged into the serial port 152) may be presented on the computing device 222, 102 as one or more USB mass storage devices accessible by the computing device 222, 102. The USB mass storage component 308 is responsible for handling this interaction from the perspective of the wireless device 102.

In another example, a VPN component 310 may be responsible for handling some or all aspects of communications between a wireless device 102 or a computing device 222 and a VPN, either wirelessly or using a wired connection. A VPN component 310 may for example store VPN credentials needed to authenticate the wireless device 102 or the computing device 222 with the user's corporate or enterprise network. Further, such a VPN component 310 may handle access to various devices through the VPN. In some examples, a VPN component 310 may interact closely with a sever message block (SMB) protocol 314, an application-level network protocol mainly used to provide shared access to files, printers, serial ports, and miscellaneous communications between nodes on a network. SMB may be used to mount volumes on a network, for example if the wireless device 102 or the computing device 222 needed to access files stored on a particular server on the VPN.

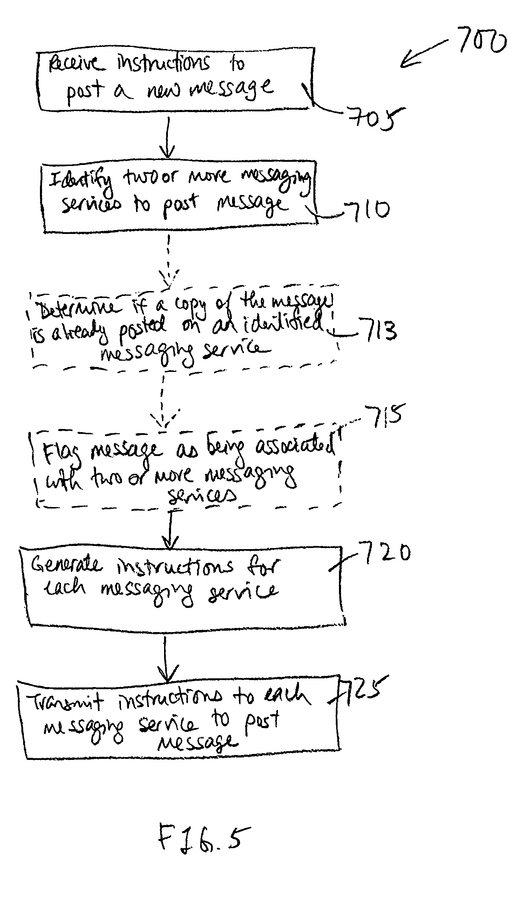

In accordance with one aspect of the present disclosure, if USB devices are to be mounted as drives in a VPN and to be available across a VPN, an interface between the USB mass storage component 308 and the VPN component 310 may need to be facilitated. The USB/Network handling module 312 may handle this task, and may be responsible primarily for translating file system requests from the network to USB requests. This is described in more detail below in connection with FIG. 5.

Thus, the various devices 222, 102, 226, 230, 232, 220, etc., include stored data representing computer-readable and -executable programmed instructions for directing the devices 222, 102, 226, 230, 232, 220, etc. to implement various functions or processes in accordance with the disclosure. Such programmed instructions may, for example, be embodied in one or more software modules 306 resident in memory(ies) 300 (including, for example, any or all of memory module(s) 130, flash memory(ies) 144, random access memory(ies) (RAM(s)) 146, and read-only memory(ies) (ROM(s) 148) of any or all of corresponding devices 222, 102, 226, 230, 232, 220, etc.. Alternatively, such executable instruction data may be tangibly embodied on articles of manufacture such as computer readable media (such as a DVD, CD, floppy disk or other storage media) which may for example be used for transporting the programmed instructions to the memory 300 of the wireless device 102 or computing device 222 and/or executing any of the functions disclosed herein under the control of any processor(s) 140 of such device(s). Alternatively, the programmed instructions may be embedded in computer-readable, signal-bearing media that is uploaded or uploadable to wireless network 104(s) by a vendor or supplier of the programmed instructions, so that such signal-bearing media may be downloaded through one or more of the interfaces 112, 150, 152, 162 to the wireless device 102 or the computing device 222 from, for example, the wireless network 104 by end users.

Among the many uses made of systems 200 such as that shown in FIG. 2 is the sharing of audio, text, and other messages between users of communication devices 102 and/or computing devices 222, including for example users of multiple wireless devices 102 and wire-line devices (e.g., a wire-line computing device 222) communicating via e-mail service(s) provided by server(s) 238; instant messaging, bulletin board, and 'chat room' service(s) provided by server(s) 240; and/or voice or other audio services provided via various forms of telecommunication server(s). In some examples, e-mail, IM, short message service (SMS) and/or other chat and/or messaging services may be used to engage in two-way or multi-way "conversations" made up of series of messages and responses between two or more communication devices 102 and/or computing devices 222. Such series of messages and responses are sometimes referred to as message "threads". Such conversations may be facilitated by e-mail, IM, SMS and/or other chat and/or messaging services between sets of two or more users, who are sometimes referred to as correspondents. A single thread may be defined, or distinguished from other message traffic, according to any desired or useful criteria. For example, all of the current or recent correspondence between two or more messaging service users may be defined as a distinct thread. Similarly, all of the correspondence related to a current communications session between one or more defined sets of correspondents can be defined as distinct threads. Another possibility is to define all of the correspondence between multiple users related to a defined subject or topic as a distinct thread.

A problem may arise when, for example, a set or group of users of multiple distinct messaging services wishes to engage in a single or common conversation. Historically it has not been possible to efficiently transmit, or post, a single originating or responsive message simultaneously to multiple addressees who are users of separate distinct messaging services.

Nor has it been possible to efficiently transmit, or cross-post, replies from individual users of distinct messaging services to multiple users of other services while maintaining the integrity of the message thread among all users.

To "cross-post" a message may mean to post an outgoing message from a single user of a single messaging service to multiple users of multiple messaging services 232, such as multiple IM, SMS and/or chat servers 240. In accordance with methods disclosed herein, such cross-posting may be accomplished simultaneously, or in other desired synchronized fashion, near-simultaneously, and/or without concern for simultaneous or synchronized delivery.

The term "message" may be used to refer to content signal data representing a communication that may be posted on or otherwise provided to a messaging server 232, 238, 240. Such messages may include any type of communications compatible with the disclosure herein, and may include content data, for example, text data, image data, video data, audio data, and/or combinations thereof. Content data, in some examples, may be referred to as message body. Such messages may also include suitably-configured control data, for example address headers, tags, flags, etc. Content data and/or control data of a message may be configured to suit one or more messaging services to which the message is to be posted. For example, different messaging services may require different formats for content data and/or different protocols for control data. In some examples, at least a portion of the control data may be embedded or otherwise provided in content data.

To post a message may mean to make it available to a user of a messaging service for reading, listening, accessing, display, viewing, responding, and/or any combination(s) thereof, or for other communications processing, for example by forwarding the message to a user's device 102, 222, saving the message in a user-accessible memory of a server, etc.

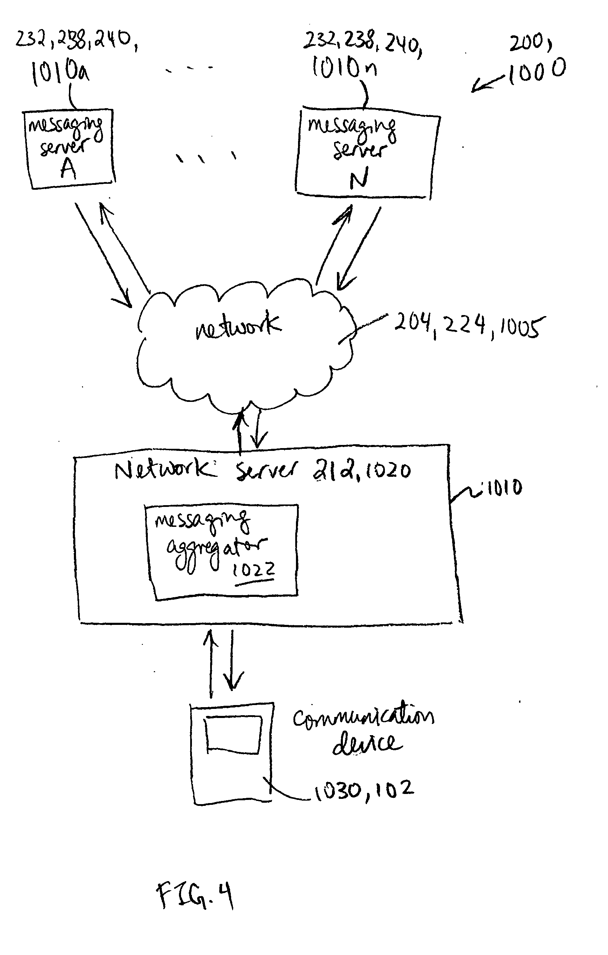

FIG. 4 is a schematic block diagram of an example of components of a communication system 200, 1000 suitable for use in implementing aspects of the disclosure related to the simultaneous and/or cross-posting of individual messages belonging to message threads. In the example shown, system 200, 1000 comprises a plurality of messaging servers 232 A to N 1010a to 1010n, communicatively linked through a communications network 1005, 204, 224 with a network server 1020 controlling or otherwise serving one or more communication device(s) 102, 222, 1030.

Each of messaging servers A to N 1010a to 1010n may manage one or more messaging services (e.g., message forums, IM sites, SMS sites, Blackberry^{TM} Messenger, bulletin boards, blogs, Twitter^{TM}, Facebook^{TM}, etc.) accessed by one or more communication devices 222, 102, 1030. Such messaging servers 1010a to 1010n may in general manage messages, which may be organized into message threads, created by one or more users; and may make such messages available, i.e., post them, for access by other servers (e.g., network server 1020, or other messaging servers 232, 1010) or devices 102, 222, 1030 or both. For the sake of simplicity, each messaging server 1010, including servers A to N 1010a to 1010n, will be described as managing a single messaging service A to N; however it should be understood that more than one messaging service may be managed by a single messaging server 1010a to 1010n.

System 1000 may comprise one or more network servers 1020, any or all of which may themselves serve as messaging servers 232, 238, 240, 1010. One or more of the network servers 1020 may be an enterprise network server (e.g., as part of an intranet). Each network server 1020 may control and/or otherwise communicate with one or more communication devices 1030, 102, 222 (which may for example include one or more of any or all of wireless communication device(s), handheld communication device(s), a desktop communication device(s), and other communication device(s)) for transmitting and receiving signals representing content data (e.g., voice or text content intended by originating users to be communicated to receiving users) as well as communications command instruction signals. While in some examples a network server 1020 may have capabilities for managing the communication device(s) 1030, 102, 222 (e.g., provisioning services, setting user profiles, etc.), in other examples such network server(s) 1020 may be general content servers or gateways. For example, a network server 1020 may be a wireless network gateway 210, a network provider system 212, an email server 238, an IM server 240, or other communication server 232, and/or a content server 226.

Network(s) 1005 may comprise any suitable wired or wireless network(s) 104, including, for example, one or more of a wireless WAN 202, a WLAN 204, an enterprise network 224, and a WAN 228.

In the example shown, network server(s) 1020, 1010 may each include one or more software modules 304, 306, etc., and/or other machine-executable instructions, stored in memory(ies) 130, 144, 146, 148, etc., and/or other machine-readable media accessible by server processor(s) 140 (not shown). Such machine-executable instructions may comprise one or more messaging aggregator modules 1022. In various examples, such software module(s) or machine-executable instruction sets, stored in a memory(ies) or other machine-readable media comprising messaging aggregator(s) 1022 may additionally or alternatively be wholly or partly resident on the communication device(s) 1030, 102, 222.

Although not shown, each of the messaging server(s) 1010, 1010a to 1010n, including network server(s) 1020, may include one or more processors 140 coupled to corresponding communication subsystem(s) 114, 116, etc., for receiving, transmitting, and processing signals as described herein, particularly with respect to communication device(s) 102, 222, 1030. Each of the target messaging server(s) 1010a to 1010n and network server(s) 1020 may further include one or more memory(ies) 130, etc., coupled to and accessible by such processor(s) 140, for storing one or more of software applications, data settings, and client settings, including, for example, messaging aggregator(s) 1022 suitable for use in implementing the various aspects of the disclosure herein.

FIG. 5 is a schematic flowchart illustrating an example of a process or a method 700 for posting message content to multiple messaging services in accordance with the disclosure. In the example shown, process or method 700 provides for the posting of a new message to multiple target messaging services in accordance with a selection made by a user of a communication device 1030, 102, 222. Such a method 700 may be applicable, for example, to the creation of a new messaging thread to be accessed and responded to by users of two or more different messaging services, or in response to an existing thread, such as one that is not already cross-posted to two or more different messaging services. The method or process 700 may be implemented within a network server 1020 (e.g., where a controlling or otherwise associated messaging aggregator 1022 is resident in the network server 1020), or may be implemented within the communication device 1030, 102, 222 (e.g., where the corresponding messaging aggregator 1022 is resident in the communication device 1030, 102, 222).

At 705, signals representing instructions to create a new message, including new message content, are received, for example by the messaging aggregator 1022. The instructions may be received from the originating communication device 1030, 102, 222 by the network server 1020 (e.g., where the messaging aggregator 1022 is resident on the network server 1020) and/or may be received by the processor 140 of the communication device 1030, 102, 222 from one or more physical or virtual keyboards, keypads, or other input devices 154, etc. in response to user input (e.g., where the messaging aggregator 1022 is resident on the communication device 1030, 102, 222). The instructions may include a message content data set and control data representing a selection of two or more target messaging services to which the message is to be posted. Identifiers identifying the two or more selected messaging services may for example be embedded within the message content data set or may be a separate, associated control data set. For example, the message data set may include control data (e.g., header data) including encoded instructions identifying the two or more target messaging services for posting, such as:
<cross-post><post target = twitter, facebook>

In some examples, the received message content data may include encoded control data including instructions (e.g., embedded in message text) indicating that the message should be cross-posted to two or more messaging services. Such instructions may be extracted or parsed from the message content data by the messaging aggregator 1022. For example, the message content data may include symbols (e.g., @, #) that are unique command characters according to protocols adopted by various messaging servers 1010 or messaging services, and thus indicate that the message content should be posted to at least those messaging services. For example, the @ symbol may be used by a messaging service, such as Twitter, as a flag for facilitating addressing of a message to a certain user or user group of subscribers of that service. The presence of such a symbol followed by an identifier such as a user name (e.g., @bob) in the message content may be extracted or parsed by the messaging aggregator 1022 and may be interpreted by the messaging aggregator 1022 as control data indicating that the message should be posted to the Twitter messaging service and addressed to the identified user.

In some examples, the selection of two or more target messaging services may be provided in the instructions separate from the message content data set, such as in control data separate from the message content data (e.g., encoded in header data of the message). Where there is a plurality of messaging aggregators 1022 (e.g., each device 1030, 102, 222 or each server 212, 232, etc. having its own messaging aggregator 1022), such instructions may be encoded using a commonly defined protocol.

In various examples, a new message may be created (e.g., via one or more input devices 154 such as physical or virtual keypads or keyboards, and/or pointing devices, provided on the communication device 1030, 102) by a user who has accessed an IM, SMS, e-mail, voice, or other communications application resident on a communication device 1030, 102. Data representing content to be posted for consideration by users of the same and other communications applications or messaging services may be entered by such a user in response, for example, to prompts provided by the accessed communications application. Data identifying both the addressees to whom the content is to be delivered and, expressly or by implication, the service(s)/communications application(s) used by such addresses may be input in response to further prompts provided by the input application.

Posting of a message may be performed in accordance with instruction or control signals transmitted to the network server 1020, for example in response to input at the communication device 1030, 102 using one or more interfaces (described below), and instructions communicated to the respective messaging server 1010a to 1010n. Where instructions to post a message include instructions to cross-post on two or more messaging services (e.g., messaging service A and messaging service N), the message may be identified by the messaging aggregator 1022 (e.g., automatically or in response to input instructions at the communication device 1030, 102) as being associated with the two or more messaging services. The message may be labeled, flagged or otherwise identified as being associated with two or more messaging services, and the messaging services to which the message is cross-posted may also be identified and this information associated with the message. For example, the messaging aggregator 1022 may insert cross-posting control data indicating that the message is being cross-posted to two or more messaging services, and/or cross-posting control data indicating the two or more messaging services to which the same message and/or subsequent messages are to be posted. The cross-posting control data may be inserted as into header data and/or into message content data (e.g., text), such as described above.

In some examples, instructions to post a new message (e.g., received via one or more input device(s) 154 on the communication device 1030, 102, 222) may include control data indicating a selection of which messaging service(s) the new message should be posted to (e.g., using one or more interfaces as described below).

Cross-posting control data identifying two or more associated messaging services may be provided by the communication device 1030, 102 (e.g., included in the original instructions transmitted to the network server 1020) or may be appended to and/or inserted into the message by the messaging aggregator 1022 in the instructions sent to the messaging server(s) 1010a to 1010n. Such identifiers may be provided by the originating user of the communication device 1030, 102, 222 on an *ad hoc* basis, either individually or through designation of one or more predefined user groups, and/or may be determined in accordance with other predefined user preferences.

An example message data set may be structured as follows:
<message or thread identifier>
<cross-post to multiple messaging services = YES>
<messaging services = messaging service A; messaging service group B;>
<message content>
Where:
<message or thread identifier> can be determined using subject line data or any other suitable data or flags
<messaging services> can be input on a case-by-case basis by a user using a physical or virtual keypad, point-and-select menu, or other input device or mechanism; by selecting predetermined or otherwise predesignated user groups from a menu or list; and/or by preset user preferences

Other variations are possible. For example, such as where instructions for cross-posting to multiple messaging services are encoded within the message content data (e.g., cross-posting control data is inserted into message content data by the messaging aggregator 1022), the message data set may not include the <cross-post to multiple messaging services> and <messaging services> tags.

At 710, the two or more messaging services to which the new message is to be posted are identified, for example by the messaging aggregator 1022 parsing or otherwise extracting relevant information from the instruction signal set received at 705. Target messaging services may be identified by, for example, a service name, service code, or other suitable service identifier, which may be embedded within or otherwise associated with buddy lists or other user groups previously defined by the originating user. Identification of the messaging services may include identification of the respective target messaging server(s) 1010a to 1010n that manage the messaging service.

As described above, the messaging aggregator 1022, in some examples, may automatically modify message content data to include encoded control data indicating that the message should be cross-posted to two or more messaging services. This may be useful, for example, where different messaging services do not share a common protocol or coding language for message headers or general control data, in which case instructions encoded in the header or other separate control data may be lost or corrupted for postings to one or more messaging services. In such situations, the message content data, including any encoded cross-posting control data, may be treated as simple text by the messaging service and may be preserved. Such encoded control data may be relatively short, to avoid significantly increasing the size of the message. In some examples, such encoded control data may also be manually inserted into the message content by a user. Examples of how such instructions may be encoded within the message content may be:
<cross-post><post target = twitter, facebook>

In some examples, the messaging aggregator 1022 may additionally or alternatively insert or otherwise provide such control data in message header data.

At 713, optionally, it may be determined whether or not content identical or sufficiently similar to that of the new message is already posted on one or more of the selected messaging services. In some examples, signals representing a query request may be transmitted to one or more target messaging servers 1010a to 1010n identified as managing the selected messaging service(s) to check whether content identical or sufficiently similar to that of the new message already is present in the messaging service(s) managed by the respective messaging server(s) 1010a to 1010n. This check may be carried out at the receiving messaging server(s) 1010a to 1010n using suitable methods, including, for example, comparisons of message topic, message sender, posting time, message text, or combinations thereof. Content where a majority (e.g., greater than 50%, for example greater than 95%) of the content is the same may be considered sufficiently similar. The messaging server(s) 1010a to 1010n may return signals to the messaging aggregator 1022 representing a response that content identical or sufficiently similar to that of the new message already is present or is not present on the respective messaging service(s). Such signals may be in the form of a simple reply command or may include at least a portion of the identical or sufficiently similar content.

As will be understood by those skilled in the relevant arts, once they have been made familiar with this disclosure, determinations whether content is sufficiently similar to delete or omit creation of redundant copies at various servers may be based on any desired threshold criteria. For example, to be considered sufficiently similar to avoid making of redundant copies content may be required to be identical, or may be required to be greater than 95%, or greater than 50%, similar. Moreover, threshold criteria may be selectable by user(s) of individual communications devices 102, and/or by administrators of any one or more of servers 226, 230, 232, 238, 240, etc. Alternatively or in addition, such thresholds may be permanently or dynamically set by such server(s) based on available communications bandwidth, memory or other storage capacity, etc.

If content identical or sufficiently similar to that of the new message is already present in a given one or more of the identified messaging services, then, in order to avoid redundant duplication, instructions to post the new message may not be generated for that given messaging service(s). For example, that given messaging service(s) may be removed from the list of identified target messaging services to which the message is to be posted, for example by deleting corresponding an identifier of the given messaging service(s) from the message data set; or by setting a flag to omit posting the new message to the given messaging service(s).

Alternatively or additionally, signals may be transmitted (e.g., from the network server 1020 to the communication device 1030, 102, 222) requesting a confirmation (e.g., via a dialog box displayed on the display 142) that the message is redundant and should not be posted to the given messaging service. If all of the identified messaging services are found to be redundant in this manner, then it may be determined (e.g., by the messaging aggregator 1022) that the new message should not be posted (e.g., with or without confirmation from the communication device 1030, 102, 222) and the method 700 may end.

At 715, optionally, the message may be identified as being associated with two or more messaging services, and suitable flag(s) or other suitable identifier(s) may be associated with the corresponding message data record. For example, where a database of messages and associated messaging services are stored (e.g., at the network server 1020), data representing this information may be added to the database. Where the method 700 is carried out in the communication device 1030, 102, 222, this may include transmitting signals from the communication device 1030, 102, 222 to an external database (e.g., stored in a network server 1020) to store this information. In another example, where this information is associated with the message data set itself, the appropriate data may be created and inserted or otherwise associated with the message data set.

At 720, instruction data sets may be generated (e.g., by the messaging aggregator 1022) for each identified messaging service to which the new message is to be posted. For example, the instruction data set may include the message content data set only, or the message content data set together with associated information labeling the message as being cross-posted to different messaging services. The instruction data sets generated for each identified messaging service may be identical or may be different (e.g., formatted to suit each different messaging service).

In some examples, where 715 is optionally not carried out, the message may not be identified as being associated with two or more messaging services. In such cases, at 720, the instruction data sets generated may not include any information that the message is being cross-posted to two or more messaging services. In some examples, the generated instruction data sets may be substantially duplications of the instructions received at 705, without any information about which messaging services to post to, or with information about which messaging services to post to being embedded within the message content.

At 725, generated instruction signals are transmitted or otherwise provided by the network server 1020 to the respective addressee messaging server(s) 1010a to 1010n. For example, the messaging aggregator 1022 may cause the instructions to be transmitted (e.g., via the transmitter 116, where the messaging aggregator 1022 is resident on the communication device 1030, 102, 222; or via a communication subsystem on the network server 1020, where the messaging aggregator 1022 is resident on the network server 1020) to the appropriate respective messaging server 1010a to 1010n for each messaging service.

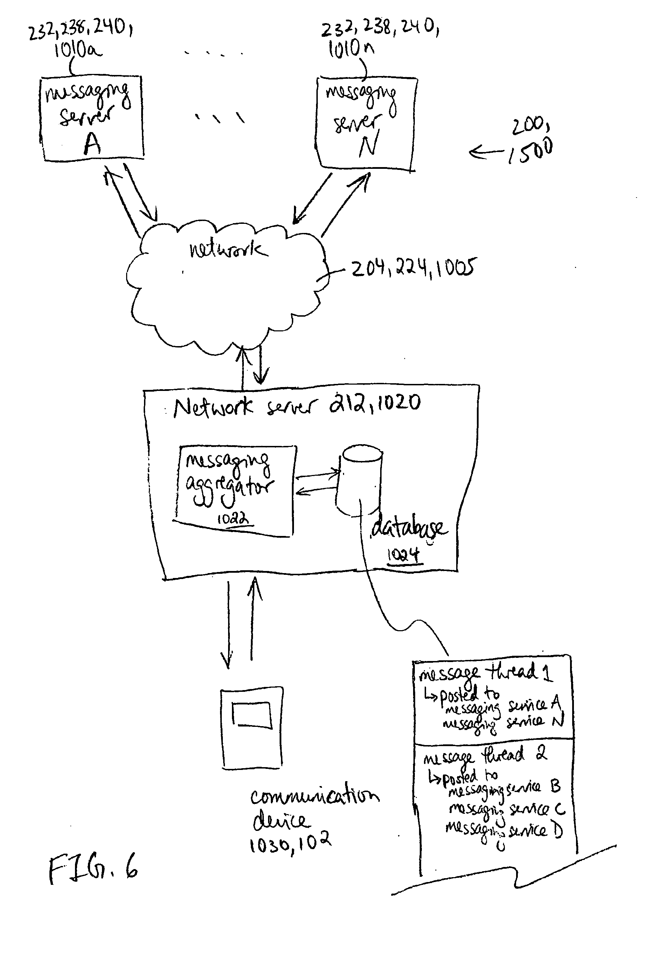

FIG. 6 is a schematic block diagram of an example of components of a communication system 1500, suitable for use in implementing aspects of the disclosure, and in particular for cross-posting of messages pertaining to pre-existing message threads across multiple messaging services (which may be managed, for example, by one or more messaging servers 1010). A system 1500 may comprise all or a part of a system 200 as disclosed herein. Such a system 1500 may be similar to system 1000 described above, including two or more messaging servers A to N 1010a to 1010n, network(s) 1005, network server(s) 1020, and communications device(s) 1030, 102, 222.

In the example shown, the network server 1020 may include messaging aggregator module(s) 1022 and additionally database(s) 1024, for example stored in memory(ies) of the network server 1020. In other examples, the messaging aggregator(s) 1022 and the database 1024 may additionally or alternatively be resident on the communication device 1030, 102, 222.

As in the system 1000, a message may be labeled, flagged or otherwise identified as being addressed to and/or otherwise associated with two or more messaging services. Data representing desired or intended associations with two or more messaging services with a message may be stored for ongoing or other future use, for example for use in continuing threads or "conversations", in a database 1024. For example, a messaging aggregator 1022 may communicate with the database 1024 to store data tracking which messages or message threads have been cross-posted to which messaging services, and addressed to which user of such services. For example, a database 1024 may store, such as in table form or using flags, etc., identifying information about a message thread (e.g., thread topic, thread creation time, thread identification number, any other suitable thread identifier, or a combination thereof) and identifying information about the respective associated messaging services (e.g., messaging service name, corresponding messaging server 1010, individual or group user identifiers (e.g., buddy lists) or any other suitable messaging service/individual or group addressee identifiers). Thus, which message threads are posted to which messaging services may be determined or identified by the messaging aggregator 1022 through queries to the database 1024. An example of a data record useful for creation of a table listing of such threads that may be suitable for use in a database 1024 may be configured as:
<message ID><thread ID><messaging service(s)>

Where: <message ID> may be a unique identifier (e.g., generated by the messaging server 1010) for the specific message; <thread ID> may be a unique identifier (e.g., generated by the messaging server 1010) for the specific thread; <messaging service(s)> may be a listing of identifiers for the messaging services to which a given thread is posted.

In further examples, in lieu of or in addition to use of database(s) 1024 a message data set representing content to be cross-posted on multiple messaging services may include or be associated with data indicating that the message is associated with two or more messaging services, as well as identification of the associated two or more messaging services, as described above. Such data identifying two or more associated messaging services may be provided by the communication device 1030, 102, 222 (e.g., included in the original instructions transmitted to the network server 1020) or may be included by the messaging aggregator 1022 in the instructions sent to the messaging server(s) 1010a to 1010n (e.g., cross-posting control data, such as control data included in header data or embedded within message content data).

Where a new message is created for cross-posting in response to an existing message thread, target messaging services to be associated with the new message may be copied from or otherwise identified based on those already associated with the existing message thread. For example, if a message thread is already cross-posted to messaging service A and messaging service B, a new message data set created to respond to the message thread may automatically (e.g., as a default, which may be over-rideable by a user) include cross-posting control data associating the new message with messaging service A and messaging service B (e.g., provided as header data and/or as part of the message content data).

Alternatively, or in addition, which messaging service(s) the new message should be posted to may be selectable by a user (e.g., using a user interface as described below), rather than copied from, based on or carried forward from the existing message thread. Where cross-posting control data is automatically inserted as part of the message content data (e.g., as a text block within the message content), this cross-posting control data may be editable, for example using conventional messaging composition tools, to allow the user to modify the messaging service(s) to which the message will be cross-posted. For example, if a message thread is already cross-posted to messaging service A and messaging service B, a new message data set created to respond to the message thread may be specified to post only to messaging service A, or to messaging service A and messaging service C. These scenarios are only examples, and other variations are possible.

In some examples, where a messaging aggregator 1022 processing an outgoing message is resident on a network server 1020 or other messaging server 1010, instructions to cross-post a new message to two or more messaging services may be transmitted from a communication device 1030, 102, 222 to the server 1020, 1010 as a single instruction set, which may, for example, include the message data set and data identifying two or more messaging services to which the outgoing message is to be posted. The server 1020, 1010 may generate (e.g., using the messaging aggregator 1022) two or more instruction sets and/or subsets for the two or more messaging services (e.g., according to protocols and/or requirements of the two or more messaging services), and may transmit the instruction sets to the respective messaging server(s) 1010a to 1010n. This may allow the same message to be posted to multiple messaging services using only a single set of instructions transmitted from the communication device 1030, 102, 222, rather than requiring multiple sets of instructions to be individually generated by and transmitted from the communication device 1030, 102, 222. This may provide for a decrease in the processing and power burden on the client device 1030, 102, 222.

In another example, for example where a messaging aggregator 1022 is resident on an originating communication device 1030, 102, 222, the identification of which target messaging service(s) 1010 a message is to be posted to and the generation and transmission of instructions to post the message to individual messaging server(s) 1010a to 1010n may take place in the communication device 1030, 102, 222. This may result in a network server 1020 receiving from the communication device 1030, 102, 222 a plurality of instruction sets and/or subsets, each set of instructions being an instruction to post the same message to a different messaging service. This may allow the function of the outgoing network server 1020 to be unmodified with respect to prior art systems.

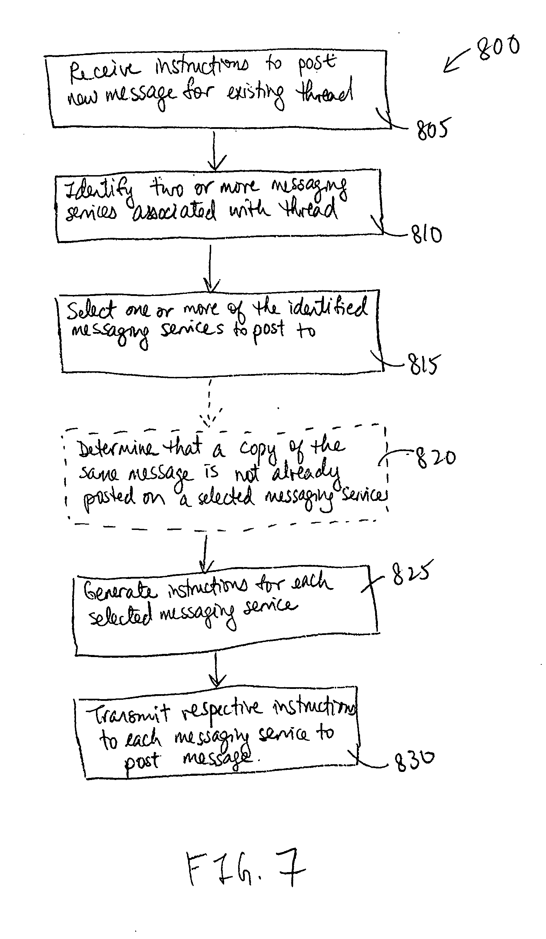

FIG. 7 is a flowchart illustrating an example of a method 800 for transmitting a message for an existing thread to different messaging services, in particular where a message is to be cross-posted to multiple target messaging services as part of an existing thread or conversation. In the example shown in FIG. 7, a new message is being posted in response to an existing thread that is already cross-posted to two or more different messaging services. The method 800 may be implemented by network server 1020 (e.g., where the messaging aggregator 1022 is resident in the network server 1020) and/or or within the originating communication device 1030, 102, 222 (e.g., where the messaging aggregator 1022 is resident in the communication device 1030, 102, 222).

At 805, signals representing instructions to create a new message relating to an existing, multi-party message thread are received, for example by a messaging aggregator 1022. Such instructions may be received from an originating communication device 1030, 102, 222 by the network server 1020 (e.g., where the messaging aggregator 1022 is resident on the network server 1020) or may be received by the processor 140 of the communication device 1030, 102, 222 (e.g., where the messaging aggregator 1022 is resident on the communication device 1030, 102, 222). The instructions may include the message data set. In some examples, the instructions may include no additional information or indication that the message should be cross-posted to two or more messaging services.

At 810, the two or more target messaging services to which the new message is to be posted are identified, for example by the messaging aggregator 1022. The messaging services may be identified by means of data identifying, for example, a service name, service code, buddy list or other group addressee list, or other suitable service identifier. Identification of the messaging services may include identification of the respective messaging server(s) 1010a to 1010n that manage the corresponding messaging service(s). Identification of the target messaging service(s) to post the new message may be made using pre-designated or otherwise pre-existing data (e.g., preset in a user profile stored in the communication device 1030, 102, 222 and/or in the network server 1020) in the absence of any explicit information in the received instructions. Previously-identified lists target messaging services may be used, or provided to a user of the communication device 1030, 102, 222 for review, as a default identification of target services for outgoing messages.

In some examples, a messaging aggregator 1022 may transmit signals representing a query to the database 1024 to determine whether an existing message thread (which may be identified by thread topic or other suitable thread identifier) is associated with two or more messaging services.

In some examples, a new message may be generated as a response to an existing thread on a given messaging service managed by a given messaging server 1010a to 1010n. The messaging aggregator 1022 may transmit signals representing a query to the given messaging server 1010a to 1010n managing the given messaging service to determine whether the existing thread is associated with two or more messaging services.

In some examples, message content data may include cross-posting control data indicating that the message should be cross-posted to two or more messaging services. Such cross-posting control data may be extracted or parsed from the message content data by the messaging aggregator 1022. For example, the message content may include symbols (e.g., @, #) that are unique command characters according to protocols adopted by various messaging services, and thus indicate that the message should be posted to at least those messaging services. For example, the @ symbol may be used by a messaging service, such as Twitter, as a flag for facilitating addressing of a message to a certain user or user group of subscribers of that service. The presence of such a symbol followed by an identifier such as a user name (e.g., @bob) in the message content may be extracted or parsed by the messaging aggregator 1022 and may be interpreted by the messaging aggregator 1022 as indication that the message should be posted to the Twitter messaging service and addressed to the identified user.

Cross-posting control data embedded in the message content may be automatically embedded by the messaging aggregator 1022, for example as described with reference to 710 above. The messaging aggregator 1022 may automatically recognize such embedded cross-posting control data within the message content data (e.g., by parsing the message content data) identify the two or more messaging services accordingly. Additionally or alternatively, the messaging aggregator 1022 may receive cross-posting control data instructing posting of the message to a plurality of messaging services within message header data provided with the instructions.

At 815, one or more of the identified two or more messaging services are selected to which the new message should be posted. For example, if the message thread is identified as being associated with two or more messaging services, the messaging aggregator 1022 may automatically determine that the new message should be posted to all of the identified two or more messaging services and automatically select all of the identified two or more messaging services.

In some examples, a confirmation may be requested from a user originating a message or reply (e.g., via a dialog box, displayed on the communication device 1030, 102, 222 via the display 142) that the message should be cross-posted to the identified two or more messaging services. In some examples, the confirmation request may additionally provide an option to select which of the identified messaging services to post to (e.g., via checkboxes, displayed on the communication device 1030, 102, 222 via the display 142).

At 820, optionally, it may be determined whether or not content identical or sufficiently similar to that of the new message is already posted on one or more of the selected messaging services. For example, signals representing a query request may be transmitted to one or more messaging servers 1010a to 1010n identified as managing the selected messaging service(s) to check whether content identical or sufficiently similar to that of the new message already is present in the messaging service(s) managed by the respective messaging server(s) 1010a to 1010n. This check may be carried out at the messaging server(s) 1010a to 1010n using suitable methods, including, for example, comparisons of message topic, message sender, posting time, message text, or combinations thereof. Content where a majority (e.g., greater than 50%, for example greater than 95%) of the content is the same may be considered sufficiently similar. The messaging server(s) 1010a to 1010n may return signals to the messaging aggregator 1022 representing a response that content identical or sufficiently similar to that of the new message already is present or is not present on the respective messaging service(s). Such signals may be in the form of a simple reply command or may include at least a portion of the identical or sufficiently similar content.

If identical or sufficiently similar to that of the new message is already present in a given of the selected messaging services, then, in order to avoid redundant duplication, instructions to post the new message may not be generated for that given messaging service. Alternatively or additionally, signals may be transmitted (e.g., from the network server 1020 to the communication device 1030, 102, 222) requesting a confirmation (e.g., via a dialog box displayed on the display 142) from one or more correspondents of a message or thread (e.g., user(s) of a communication device 1030, 102, 222) that the message should not be cross-posted to the given messaging service, for example by deselecting the given messaging service. If all of the selected messaging services are deselected in this manner, then it may be determined (e.g., by the messaging aggregator 1022) that the new message should not be posted and the method 800 may end.

At 825, instruction data set(s) are generated (e.g., by the messaging aggregator 1022) for each selected messaging service to which the new message is to be posted. For example, the instruction data set may include the message data set only, or the message data set together with associated information identifying the message as being cross-posted to different messaging services. The instruction data set(s) generated for each selected messaging service may be identical or may be different (e.g., formatted to suit each different messaging service).

In some examples, a new message may not be identified as belonging to two or more messaging services. In such cases, at 825, the instruction data sets generated may not include any information that the message is cross-posted to two or more messaging services. In some examples, the generated instruction data sets may be substantially duplications of the instructions received at 805, without any information about which messaging services to post to.

At 830, the generated instructions are transmitted to the respective messaging service. For example, the messaging aggregator 1022 may cause the instructions to be transmitted (e.g., via the transmitter 116, where the messaging aggregator 1022 is resident on the communication device 1030, 102, 222; or via a communication subsystem on the network server 1020, where the messaging aggregator 1020 is resident on the network server 1020) to the appropriate respective messaging server 1010a to 10 10n for each messaging service.

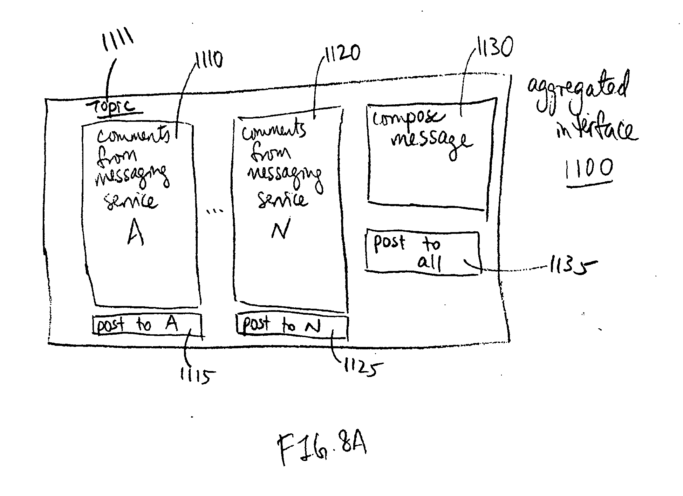

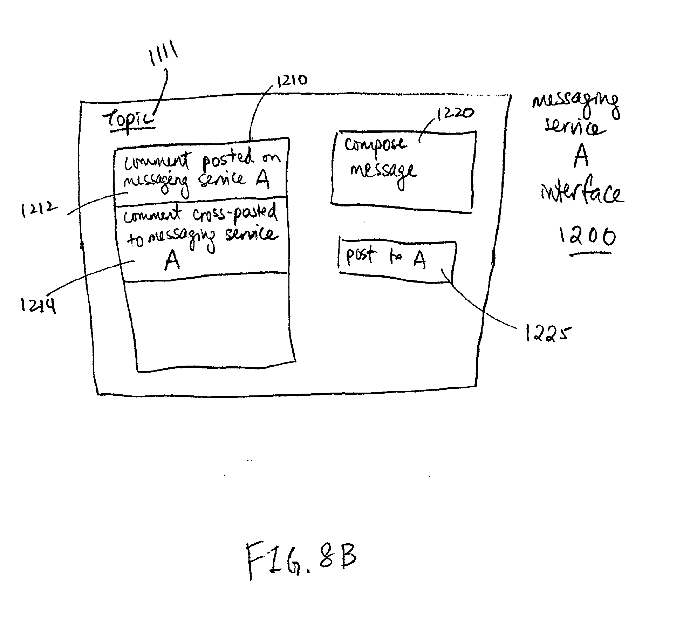

FIGS. 8A and 8B illustrate examples of user interfaces that may be presented on a communication device 1030, 102, 222 (e.g., via a display 142), configured for eliciting input to be use in processing of data relating to a message tread. In FIG. 8A, an example of an aggregation interface 1100 is provided. Interface 1100 may, for example, be generated by a communication device 1030, 102, 222 via communication with a messaging aggregator 1022. The aggregation interface 1100 may identify a selected message thread by the thread topic 1111, which may be taken from, for example a subject line of an original message used to start the thread, or from another suitable source. For example, the aggregation interface 1100 may include a message box A 1110, which may display messages, comments, postings etc. from a first messaging service (e.g., messaging service 1010A) associated with the identified message thread 1111, and a selectable icon adapted to cause posting of a message only to messaging service A. Similarly, the aggregation interface 1100 may also include a plurality of message boxes, for example up to message box N 1120, which may display messages, comments, postings etc. from a first messaging service (e.g., messaging service N) associated with the identified message thread, and a selectable icon to post a message only to messaging service N. The aggregation interface 1100 may further include a compose message field 1130 for composing a new message for the thread, and may also include a selectable icon for positing a message to all messaging services.

Alternatively, rather than individual icons 1115, 1125, 1135 for posting to individual or all messaging services, the aggregation interface 1100 may allow for selection of one or more messaging services (e.g., using checkboxes, drop-down menus, or by highlighting one or more icons representing the messaging services) and a single icon may be provided for posting to the selected messaging services.

Where a communication device 1030, 102, 222 does not communicate with or does not provide a messaging aggregator 1022, the communication device 1030, 102, 222 may display a separate interface for each messaging service, such as messaging service-specific interface 1200 shown in FIG. 8B. In the example of a messaging service-specific interface 1200 (in this example, specific to messaging service A), a selected message thread is identified (e.g., by the thread topic 1111) and all messages associated with the thread are displayed in a message box 1210. Also provided are compose message field 1220 for composing a new message for the thread. Message box 1210 may display messages posted to the thread, including messages posted only to messaging service A 1212, messages cross-posted to a messaging service A and other messaging services 1214, or both. There may also be provided a selectable icon for posting a new message only to messaging service A 1225.

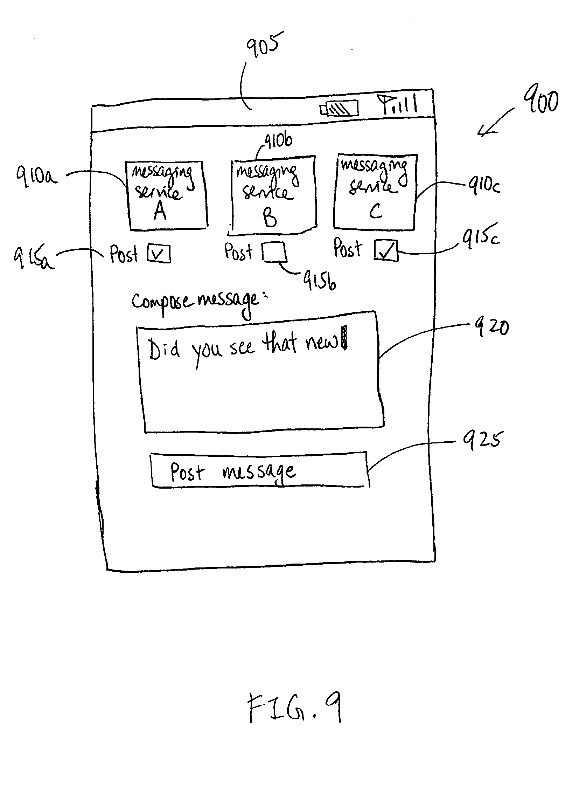

Reference is now made to FIG. 9, showing an example of a user interface 900 suitable for use in implementing aspects of the disclosure herein. The example interface 900 may be suitable for display on a communication device 1030, 102, 222, for example a wireless device 102. The example interface 900 may provide options for creating a new message, either in response to an existing message thread or for creating a new message thread, and may provide the user with the option of selecting which messaging services to post or cross-post the message.

In the example shown, where for example the interface 900 is suitable for display on the display 142 of a wireless or other communication device 1030, 102, 222, the interface 900 may include a status portion 905, which may include indicators of the state of the wireless device 102 (e.g., battery level status, connection status, current time, current network, etc.). In other examples, the interface 900 may not include the status portion 905 (e.g., to maximize the display size on a small screen, or where the communication device 1030 is a desktop device).

The interface 900 may provide functions similar to the aggregation interface 1100 described above, and may be provided in addition or as an alternative to the aggregation interface 1100.

In the example shown, the interface 900 provides options for posting a message to messaging services A, B and C, as indicated by messaging service icons 910a, 910b, 910c. The interface 900 may provide an option to select which messaging service to post to, for example by providing selectable checkboxes 915a, 915b, 915c, or other selectable icons. The interface 900 may include a compose message portion 920 for composing the content of a new message (e.g., by providing the option to enter text, images, videos, sounds, etc.). The interface 900 may also include a post message button 925 which is selectable to cause the composed message to be posted to the messaging services, for example those selected using the checkboxes 915a, 915b, 915c.

In some examples, such as in the method 800 described above, where a message is being composed in response to an existing message thread, one or more of the messaging services may be automatically selected (e.g., the checkboxes 915a, 915b, 915c may be automatically selected) based on the messaging services that are already associated with the existing message thread (e.g., as determined by the messaging aggregator 1022). For example, if a new message is being composed in response to an existing message thread that is cross-posted to messaging services A and C, the corresponding checkboxes 915a, 915c may be automatically selected (e.g., as caused by the messaging aggregator 1022).

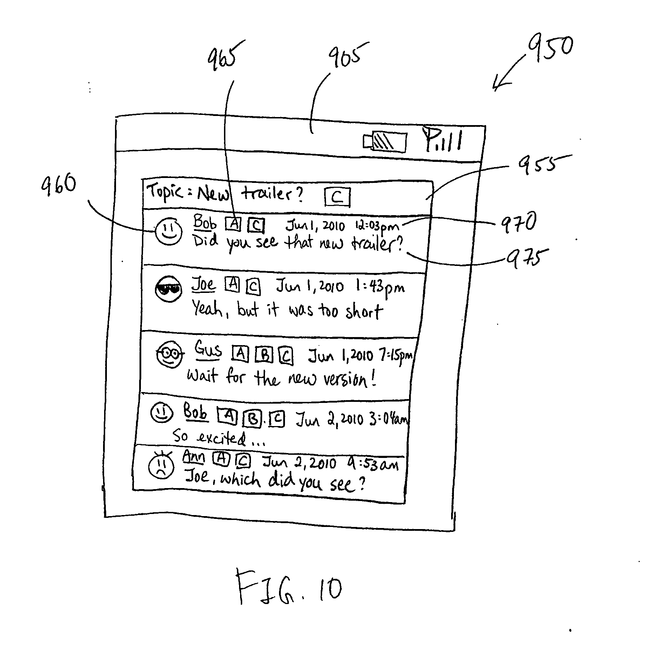

Reference is now made to FIG. 10, showing another example of an interface 950 suitable for use in implementing aspects of the disclosure. The example interface 950 may be suitable for display on a communication device 1030, 102, 222, for example a wireless device 102. The example interface 950 may allow for display of a selected message thread from a selected messaging service.

In the example shown, where the interface 950 is suitable for display on a display 142 of a wireless device 102, the interface 950 may include a status portion 905, which may include indicators of the state of the wireless device 102 (e.g., battery level status, connection status, current time, current network, etc.). In other examples, the interface 950 may not include the status portion 905 (e.g., to maximize the display size on a small screen, or where the communication device 1030 is a desktop device).

The interface 950 may provide functions similar to the messaging service-specific interface 1200 described above, and may be provided in addition or as an alternative to the interface 1200.

In the example shown, interface 950 may present a display of messages for a selected thread in a selected messaging service. The interface may include a topic line 955, providing information about the selected message thread, for example including the topic of the message thread (in this case, "New trailer?"), and providing information about the selected messaging service, for example including an icon indicating which messaging service the user is currently using (in this case, messaging service C).

Messages in a displayed message thread may be organized according to any suitable criteria or method, for example chronologically, by sender, by messaging service(s), etc. In the example shown, the messages are ordered chronologically. Each message may include, for example, information about the sender 960 (e.g., a sender icon, a sender name, or both), information about which messaging service(s) the message is (cross-)posted to (e.g., by displaying icon(s) 965 representing the messaging service(s) the message is (cross-)posted to), other information about the message (e.g., the time 970 the message was sent, whether the message has been read, whether the message has been replied to, etc.), and the message content 975.

As shown in the example shown, using the messaging service C, a user can see the message thread "New trailer". Looking at the messages in the thread, it can be seen that a new message thread was created by "Bob" and cross-posted to messaging services A and C. "Joe" has replied and cross-posted his reply also to messaging services A and C. "Gus" has replied and cross-posted his reply to messaging services A, B and C. "Bob" replies, also cross-posting his reply to messaging services A, B and C. "Ann" has replied and cross-posted her reply to only messaging services A and C.

It should be understood that interfaces 1100, 1200, 900 and 950 are examples provided for the purposes of illustration only and are not intended to be limiting. Variations are possible, and interfaces 1100, 1200, 900 and 950 may be modified to suit different purposes or different capabilities or both.

Under conventional methods and systems, creation of a new message in response to a message or message thread posted on a given messaging service typically results in the response message being posted onto on that given messaging service. However, where the original message is cross-posted to two or more messaging services, this may result in users of one messaging service being deprived of response messages posted on another messaging service. Using the disclosed systems and methods, a message may be cross-posted to multiple messaging services without the user having to manually duplicate instructions to post the message. The disclosed systems and methods may also allow a response to an existing cross-posted thread to be similarly cross-posted to multiple messaging services with the user having to search out what those messaging services are.

While the steps of the disclosed example methods are shown as occurring in various orders, it will be appreciated by those skilled in the art that many of the steps are interchangeable and may occur in different orders than that shown without materially affecting the end results of the disclosed example methods. Additionally, the disclosed methods have been described as being managed by the messaging aggregator 1022, it will be understood that the methods and functions may be carried out by different modules or in multiple modules. The steps described may be carried out by a single module or may be carried out by several different modules.

The embodiments of the present disclosure described above are intended to be examples only. Those of skill in the art may effect alterations, modifications and variations to the particular examples without departing from the intended scope of the present disclosure. In particular, selected features from one or more of the above-described examples may be combined to create alternative examples not explicitly described, features suitable for such combinations being readily apparent to persons skilled in the art. The subject matter described herein in the recited claims intends to cover and embrace all suitable changes in technology.

## Claims

1. A method, in a server (232, 238, 240, 1010, 1020) or a communication device (1030, 102, 222) of providing message content data pertaining to a pre-existing message thread to a plurality of electronic messaging services, the method comprising:
identifying, from information associated with the pre-existing message thread, at least one messaging service associated with the pre-existing message thread;
identifying, from received instructions to post new message content, at least one additional electronic messaging service not associated with the pre-existing message thread;
generating, for each of the Identified electronic messaging services, a corresponding instruction data set, each instruction data set executable by at least one processor associated with the corresponding electronic messaging service to cause the new message content to be posted on the corresponding electronic messaging service; and
providing a generated instruction data set to at least one processor associated with each of the identified electronic messaging services.

2. The method of claim 1, wherein at least two of the identified of electronic messaging services are accessible by different sets of users.

3. The method of claim 1 or claim 2, wherein the pre-existing message thread is posted to a first social networking service and wherein the at least one additional electronic messaging service is a different second social networking service.

4. The method of any one of claims 1 to 3, wherein each of the corresponding instruction data sets includes data representing the electronic messaging services to which the new message content is to be posted.

5. The method of any one of claims 1 to 4, wherein the corresponding instruction data sets include data indicating that the new message content is being posted to multiple electronic messaging services.

6. The method of any one of claims 1 to 5, wherein identifying the at least one additional electronic messaging service comprises extracting information identifying the at least one additional electronic messaging service from message content data included in the instructions to post new message content.

7. The method of any one of claims 1 to 6, wherein generating the corresponding instruction data sets includes inserting cross-posting control data identifying the electronic messaging services to which the new message content is being posted.

8. The method of claim 7, wherein the cross-posting control data is inserted as header data or is inserted into message content data for each of the instruction data sets.

9. The method of any one of claims 1 to 8, wherein each generated instruction data set is a duplicate of the instructions to post new message content.

10. The method of any one of claims 1 to 9, comprising determining whether content identical or similar to the new message content is already posted on at least one of the identified electronic messaging services.

11. The method of claim 10, wherein, upon determining that content identical or similar to the new message content is already posted on a given electronic messaging service, a corresponding instruction data set is not generated for the given electronic messaging service.

12. The method of claim 10 or claim 11, comprising, upon determining that content identical or similar to the new message content is already posted on a given electronic messaging service, transmitting signals to notify that content identical or similar to the new message content is already posted on the given electronic messaging service.

13. The method of any one of claims 1 to 12, comprising receiving a selection of one or more electronic messaging services to post the new message content, wherein the selection of one or more electronic messaging services is included in the identified electronic messaging services.

14. A non-transitory medium comprising machine-readable instructions executable by a processor of a computing device (1030, 102, 222, 212, 1020), the machine-readable instructions, when executed, causing the computing device to carry out the method of any one of claims 1 to 13.

15. A computing device (1030, 102, 222, 212, 1020) comprising a processor for executing coded instructions, the coded instructions, when executed, causing the computing device to carry out the method of any one of claims 1 to 13.

## Patentansprüche

1. Ein Verfahren in einem Server (232, 238, 240, 1010, 1020) oder einer Kommunikationsvorrichtung (1030, 102, 222) zum Vorsehen von Nachrichteninhaltdaten hinsichtlich eines vorher-existierenden Nachrichten-Threads an eine Vielzahl von elektronischen Messaging-Diensten, wobei das Verfahren aufweist:
Identifizieren, aus Information, die mit dem vorher-existierenden Nachrichten-Thread assoziiert ist, zumindest eines Messaging-Diensts, der mit dem vorher-existierenden Nachrichten-Thread assoziiert ist;
Identifizieren, aus empfangenen Anweisungen, einen neuen Nachrichteninhalt zu posten bzw. veröffentlichen, zumindest eines zusätzlichen elektronischen Nlessaging-Diensts, der nicht mit dem vorher-existierenden Nachrichten-Thread assoziiert ist;
Erzeugen, für jeden der identifizierten elektronischen Messaging-Dienste, eines entsprechenden Anweisungsdatensatzes, wobei jeder Anweisungsdatensatz durch zumindest einen Prozessor ausführbar ist, der mit dem entsprechenden elektronischen Messaging-Dienst assoziiert ist, um zu veranlassen, dass der neue Nachrichteninhalt auf dem entsprechenden elektronischen Messaging-Dienst veröffentlicht wird; und
Liefern eines erzeugten Anweisungsdatensatzes an zumindest einen Prozessor, der mit den identifizierten elektronischen Messaging-Diensten assoziiert ist.

2. Das Verfahren gemäß Anspruch 1, wobei auf zumindest zwei der elektronischen Messaging-Dienste durch verschiedene Sätze von Benutzern zugegriffen werden kann.

3. Das Verfahren gemäß Anspruch 1 oder Anspruch 2, wobei der vorherexistierende Nachrichten-Thread an einem ersten Soziales-Netzwerk-Dienst veröffentlicht wird und wobei der zumindest eine zusätzliche elektronische Messaging-Dienst ein anderer zweiter Soziales-Netzwerk-Dienst ist.

4. Das Verfahren gemäß einem der Ansprüche 1 bis 3, wobei jeder der entsprechenden Anweisungsdatensätze Daten umfasst, die die elektronischen Messaging-Dienste repräsentieren, bei denen der neue Nachrichteninhalt zu veröffentlichten ist.

5. Das Verfahren gemäß einem der Ansprüche 1 bis 4, wobei die entsprechenden Anweisungsdatensätze Daten umfassen, die anzeigen, dass der neue Nachrichteninhalt bei mehreren elektronischen Messaging-Diensten veröffentlicht wird.

6. Das Verfahren gemäß einem der Ansprüche 1 bis 5, wobei das Identifizieren des zumindest einen zusätzlichen elektronischen Messaging-Diensts aufweist ein Extrahieren von Information, die den zumindest einen zusätzlichen elektronischen Messaging-Dienst identifiziert, aus Nachrichteninhaltsdaten, die in den Anweisungen enthalten sind, einen neuen Nachrichteninhalt zu veröffentlichen.

7. Das Verfahren gemäß einem der Ansprüche 1 bis 6, wobei das Erzeugen der entsprechenden Anweisungsdatensätze umfasst ein Einfügen von Quer-Veröffentlichungs-Steuerungsdaten, die die elektronischen Messaging-Dienste identifizieren, bei denen der neue Nachrichteninhalt veröffentlicht wird.

8. Das Verfahren gemäß Anspruch 7, wobei die Quer-Veröffentüchungs-Steuerungsdaten als Header-Daten eingefügt werden oder in Nachrichteninhaltdaten für jeden der Anweisungsdatensätze eingefügt werden.

9. Das Verfahren gemäß einem der Ansprüche 1 bis 8, wobei jeder erzeugte Anweisungsdatensatz ein Duplikat der Anweisungen zum Veröffentlichen eines neuen Nachrichteninhalts ist.

10. Das Verfahren gemäß einem der Ansprüche 1 bis 9, das aufweist ein Bestimmen, ob Inhalt, der identisch oder ähnlich zu dem neuen Nachrichteninhalt ist, bereits auf zumindest einem der identifizierten elektronischen Messaging-Dienste veröffentlicht ist.

11. Das Verfahren gemäß Anspruch 10, wobei, bei einem Bestimmen, dass Inhalt, der identisch oder ähnlich zu dem neuen Nachrichteninhalt ist, bereits auf einem gegebenen elektronischen Messaging-Dienste veröffentlicht ist, ein entsprechender Anweisungsdatensatz für den gegebenen elektronischen Messaging-Dienst nicht erzeugt wird.

12. Das Verfahren gemäß Anspruch 10 oder Anspruch 11, das aufweist, bei einem Bestimmen, dass Inhalt, der identisch oder ähnlich zu dem neuen Nachrichteninhalt ist, bereits auf einem gegebenen elektronischen Messaging-Dienste veröffentlicht ist, ein Übertragen von Signalen, um zu informieren, dass Inhalt, der identisch oder ähnlich zu dem neuen Nachrichteninhalt ist, bereits auf dem gegebenen elektronischen Messaging-Dienste veröffentlicht ist.

13. Das Verfahren gemäß einem der Ansprüche 1 bis 12, das aufweist ein Empfangen einer Auswahl von einem oder mehreren elektronischen Messaging-Diensten, um den neuen Nachrichteninhalt zu veröffentlichen, wobei die Auswahl von einem oder mehreren elektronischen Messaging-Diensten in den identifizierten elektronischen Messaging-Diensten enthalten ist.

14. Ein nicht-transitorisches Medium, das maschinenlesbare Anweisungen aufweist, die durch einen Prozessor einer Computervorrichtung (1030, 102, 222, 212,1020) ausführbar sind, wobei die maschineniesbaren Anweisungen bei Ausführung die Computervorrichtung veranlassen, das Verfahren gemäß einem der Ansprüche 1 bis 13 auszuführen.

15. Eine Computervorrichtung (1030, 102, 222, 212,1020), die einen Prozessor aufweist zum Ausführen von codierten Anweisungen, wobei die codierten Anweisungen bei Ausführung die Computervorrichtung veranlassen, das Verfahren gemäß einem der Ansprüche 1 bis 13 auszuführen.

## Revendications

1. Procédé, dans un serveur (232, 238, 240, 1010, 1020) ou un dispositif de communication (1030, 102, 222), destiné à fournir des données de contenu de message concernant un fil de message préexistant à une pluralité de services de messagerie électronique, le procédé comprenant le fait :
d'identifier, à partir d'informations associées au fil de message préexistant, au moins un service de messagerie associé au fil de message préexistant ;
d'identifier, à partir d'instructions reçues pour publier un contenu de nouveau message, au moins un service de messagerie électronique supplémentaire qui n'est pas associé au fil de message préexistant ;
de générer, pour chacun des services de messagerie électronique identifiés, un ensemble de données d'instructions correspondant, chaque ensemble de données d'instructions pouvant être exécuté par au moins un processeur associé au service de messagerie électronique correspondant pour amener la publication du contenu de nouveau message sur le service de messagerie électronique correspondant ; et
de fournir un ensemble de données d'instructions généré à au moins un processeur associé à chacun des services de messagerie électronique identifiés.

2. Procédé de la revendication 1, dans lequel au moins deux des services de messagerie électronique identifiés sont accessibles par différents ensembles d'utilisateurs.

3. Procédé de la revendication 1 ou la revendication 2, dans lequel le fil de message préexistant est publié à un premier service de réseautage social, et dans lequel ledit au moins un service de messagerie électronique supplémentaire est un deuxième service de réseautage social différent.

4. Procédé de l'une quelconque des revendications 1 à 3, dans lequel chacun des ensembles de données d'instructions correspondants comporte des données représentant les services de messagerie électronique auxquels le contenu de nouveau message doit être publié.

5. Procédé de l'une quelconque des revendications 1 à 4, dans lequel les ensembles de données d'instructions correspondants comportent des données indiquant que le contenu de nouveau message est en train d'être publié à de multiples services de messagerie électronique.

6. Procédé de l'une quelconque des revendications 1 à 5, dans lequel l'identification de l'au moins un service de messagerie électronique supplémentaire comprend le fait d'extraire des informations identifiant l'au moins un service de messagerie électronique supplémentaire à partir de données de contenu de message incluses dans les instructions pour publier le contenu de nouveau message.

7. Procédé de l'une quelconque des revendications 1 à 6, dans lequel la génération des ensembles de données d'instructions correspondants comporte l'insertion de données de commande de multipostage identifiant les services de messagerie électronique auxquels le contenu de nouveau message est en train d'être publié.

8. Procédé de la revendication 7, dans lequel les données de commande de multipostage sont insérées comme étant des données d'en-tête ou sont insérées dans des données de contenu de message pour chacun des ensembles de données d'instructions.

9. Procédé de l'une quelconque des revendications 1 à 8, dans lequel chaque ensemble de données d'instructions généré est un duplicata des instructions pour publier le contenu de nouveau message.

10. Procédé de l'une quelconque des revendications 1 à 9, comprenant le fait de déterminer si un contenu identique ou similaire au contenu de nouveau message est déjà publié sur au moins l'un des services de messagerie électronique identifiés.

11. Procédé de la revendication 10, dans lequel, lors de la détermination qu'un contenu identique ou similaire au contenu de nouveau message est déjà publié sur un service de messagerie électronique donné, un ensemble de données d'instructions correspondant n'est pas généré pour le service de messagerie électronique donné.

12. Procédé de la revendication 10 ou la revendication 11, comprenant, lors de la détermination qu'un contenu identique ou similaire au contenu de nouveau message est déjà publié sur un service de messagerie électronique donné, la transmission de signaux pour notifier qu'un contenu identique ou similaire au contenu de nouveau message est déjà publié sur le service de messagerie électronique donné.

13. Procédé de l'une quelconque des revendications 1 à 12, comprenant la réception d'une sélection d'un ou de plusieurs services de messagerie électronique pour publier le contenu de nouveau message, la sélection d'un ou de plusieurs services de messagerie électronique étant incluse dans les services de messagerie électronique identifiés.

14. Support non transitoire comprenant des instructions lisibles par machine pouvant être exécutées par un processeur d'un dispositif informatique (1030, 102, 222, 212, 1020), les instructions lisibles par machine, lorsqu'elles sont exécutées, amenant le dispositif informatique à mettre en oeuvre le procédé de l'une quelconque des revendications 1 à 13.

15. Dispositif informatique (1030, 102, 222, 212, 1020) comprenant un processeur destiné à exécuter des instructions codées, les instructions codées, lorsqu'elles sont exécutées, amenant le dispositif informatique à mettre en oeuvre le procédé de l'une quelconque des revendications 1 à 13.
